# FASCICULE DE BREVET EUROPEEN

(11) **EP 0 829 062 B1**
(45) Date de publication et mention de la délivrance du brevet: **16.06.1999**
(21) Numéro de dépôt: 96918721.0
(22) Date de dépôt: 28.05.1996
(51) Int. Cl.: G06K 7/00, G06K 7/10

(54) **LECTEUR POUR CARTE A PUCE INTELLIGENTE**
CHIPKARTENLESER
SMART CARD READER

(30) Priorité: 30.05.1995 FR 9506369
(43) Date de publication de la demande: 18.03.1998
(73) Titulaire: SYSECA S.A., 92240 Malakoff (FR)
(72) Inventeur: CESAIRE, Gérard Thomson-CSF S.C.P.I., F-994117 Arcueil Cédex (FR); DEVAUX, François Thomson-CSF S.C.P.I., F-994117 Arcueil Cédex (FR); GERARD, Yves Thomson-CSF S.C.P.I., F-994117 Arcueil Cédex (FR)
(74) Mandataire: Beylot, Jacques
(86) Numéro de dépôt international: FR9600795
(87) Numéro de publication internationale: WO9638804

(56) Documents cités:
- EP-A- 0 490 455
- EP-A- 0 565 469
- FR-A- 2 635 598
- FR-A- 2 703 167

## Description

On désigne par carte à puce, les cartes, en général du format d'une carte de crédit, mais également les jetons munis d'un microcircuit électronique, à base de mémoires et d'un microcontrôleur, agencé pour permettre le déroulement d'une transaction par exemple bancaire ou santé.

Les lecteurs de carte à puce connus sont pourvus d'un système assurant une liaison avec une carte à puce, soit au moyen d'un connecteur électrique à broches multiples, soit au moyen d'une antenne capacitive ou inductive. Ils sont essentiellement de deux types: soit autonomes, soit transparents.

Les lecteurs autonomes de carte à puce sont ceux qui se suffisent à eux mêmes. Ils comportent les éléments de communication suffisants pour permettre à une personne de suivre et de comprendre le déroulement d'une transaction : clavier et afficheur qui sont gérés, de même que la liaison avec la carte à puce, par un microcontrôleur propre au lecteur doté d'un programme spécifique de la transaction envisagée.

Les lecteurs transparents de carte à puce servent d'accès pour la carte à puce à un système informatique programmé spécialement pour la transaction envisagée. Ils se comportent vis-à-vis du système informatique comme un simple port d'entrée-sortie spécialisé pour une carte à puce.

Ces lecteurs autonomes ou transparents de carte à puce, utilisent la carte à puce comme support de données sécurisées ou pour les fonctions de sécurité voire de chiffrement qu'elle peut offrir. Dans tous les cas, ils transmettent à la carte à puce des instructions mises sous une forme respectant un protocole d'échange spécifique, qui est souvent celui défini dans la norme ISO7816-3, et gèrent la réponse de cette dernière qu'ils traitent eux mêmes s'ils sont autonomes ou qu'ils retournent au système informatique auquel ils sont raccordés s'ils sont transparents.

Un exemple de ce genre de lecteur de carte à puce est décrit dans la demande de brevet français FR-A 2 635 598 qui a plus particulièrement pour objet un protocole de lecture des données sécurisées mémorisées dans une carte à puce permettant au lecteur de carte à puce de s'apercevoir d'une anomalie de lecture dans la carte à puce lors d'une lecture continue de données en plusieurs étapes. La transaction de lecture continue, qui consiste en une instruction de lecture de la part du lecteur suivie d'une réponse de donnée de lecture de la part de la carte puis d'éventuelles instructions de demande de donnée continue de la part du lecteur entrecoupées de réponses de donnée continue de la part de la carte, est entièrement menée sous la maîtrise du lecteur de carte à puce.

L'intelligence de la transaction est donc située, soit au niveau du lecteur, soit à celui du système informatique associé au lecteur. Cela a pour inconvénient de nécessiter une spécialisation du lecteur ou du système informatique associé en fonction du type de transaction. Ainsi, si l'on veut changer de type de transaction, il ne suffit pas de changer la programmation de la carte à puce. Il faut également changer la programmation du lecteur, s'il est autonome, ou celle du système informatique associé, si le lecteur est transparent. Cela est un obstacle au développement des applications des cartes à puce.

Pour éviter cet inconvénient, il a été proposé de ramener l'intelligence, c'est-à-dire la gestion de la transaction, au niveau de la carte à puce elle même. Cependant, cela ne suffit pas si l'on veut garder la compatibilité des cartes à puce avec les lecteurs spécialisés actuels. II faut en effet que celles-ci acceptent le protocole actuel d'échange de données. Une manière de faire est de prévoir plusieurs protocoles d'échange de données mais cela conduit à une complexification des tâches que la carte à puce intelligente doit accomplir alors que ses capacités sont par nature limitées.

La présente invention a pour but un lecteur pour carte à puce intelligente, qui ne soit pas spécialisé en fonction du type de transaction.

Elle a également pour but un lecteur banalisé pour différentes sortes de cartes à puce intelligentes utilisant un unique protocole d'échange de données compatible avec celui utilisé par les cartes à puce sans intelligence pour échanger des données avec leurs lecteurs spécialisés.

Elle a pour objet un lecteur de carte à puce intelligente remarquable en ce qu'il reste maître des échanges d'informations avec une carte à puce intelligente raccordée, qui se font à son initiative, tout en n'étant qu'un simple exécutant dans le déroulement de la transaction qui se fait à l'initiative de la carte à puce. Ce lecteur de carte à puce intelligente comporte les caractéristiques de la revendication 1.

Avantageusement, une requête de mise à disposition d'un message carte émanant du lecteur de carte à puce consiste en une commande du type "get response" normalement utilisée dans les normes ISO7816/prEN726 pour adresser au lecteur des données préparées, tandis qu'une déclaration de compte rendu émanant du lecteur de carte à puce consiste en une commande du type "enveloppe" ou "execute" normalement utilisée dans les normes ISO7816/prEN726 pour envoyer des données ou faire exécuter un programme au sein d'une carte à puce.

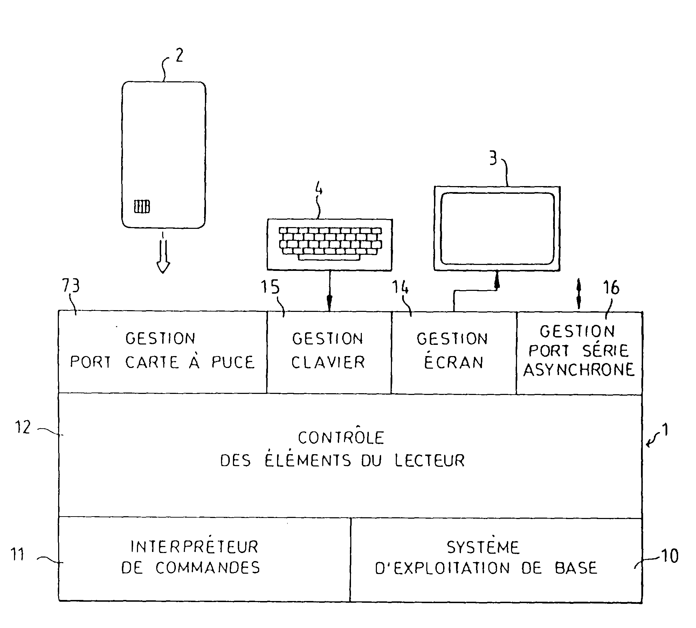

D'autres caractéristiques et avantages de l'invention ressortiront de la description ci-après d'un mode de réalisation de l'invention donné à titre d'exemple. Cette description sera faite en regard du dessin dans lequel la figure unique illustre, de manière schématique, les différentes couches logiques du programme d'un microcontrôleur d'un lecteur banalisé de cartes à puce intelligentes selon l'invention, avec ses liens avec l'environnement : la carte à puce, le clavier et l'écran.
On distingue sur cette figure les grandes partitions du programme de gestion du microcontrôleur d'un lecteur 1 de carte à puce intelligente 2 pourvu d'un écran d'affichage 3 et d'un clavier 4 de commande et d'introduction de données.

La couche la plus enfouie du programme est le système d'exploitation de base 10, en code exécutable, adapté au type de microcontrôleur utilisé pour gérer les divers éléments du lecteur 1, qui gère la mémoire du lecteur 1. Ce système d'exploitation de base 10 est associé à un interpréteur de commandes 11 reconnaissant les différentes instructions en language évolué susceptibles de se trouver dans un message carte. L'ensemble est surmonté d'une couche intercalaire constituée d'un programme de contrôle 12 assurant la maîtrise des divers éléments du lecteur 1 et d'une couche externe constituée de divers programmes de gestion de périphériques dont un programme 13 de gestion de communication avec une carte à puce selon la norme ISO7816-3, un programme 14 de gestion d'écran d'affichage, un programme 15 de gestion de clavier et un programme 16 de gestion de port série asynchrone pour une éventuelle liaison avec un système informatique déporté. Le programme de contrôle 12 assure l'aiguillage des ordres provenant des messages carte vers l'interpréteur de commande 11, la constitution des messages de compte rendu à destination de la carte à puce, l'élaboration de la succession des requêtes de mise à disposition de messages carte et des déclarations de compte rendu à destination de la carte à puce, et l'interface entre le système d'exploitation de base et les différents programmes de gestion des périphériques.

Le lecteur 1 communique avec la carte à puce intelligente 2 au moyen d'une liaison à alternat grâce à une succession de cycles de deux commandes successives des normes ISO7816/prEN726 qui sont la commande "get response" et la commande "enveloppe" ou "execute".

La commande "get-response" est constituée par l'envoi du message binaire comprenant cinq champs successifs de un octet:
- un premier champ nommé "CLA" renfermant un octet identifiant la classe de l'instruction, par exemple, instructions réservées aux applications bancaires,
- un deuxième champ nommé "INS" renfermant l'octet C0 en hexadécimal identifiant le type de commande "get response",
- un troisième champ réservé nommé "P1" renfermant l'octet 00 en hexadécimal,
- un quatrième champ réservé nommé "P2" renfermant l'octet 00 en hexadécimal, et
- un cinquième champ nommé "Le field" renfermant un octet dont la valeur n correspond au nombre d'octets attendus en réponse de la carte à puce.

Cette commande "get response" entraîne une réponse de la carte à puce dite "Data field" renfermant n octets de données, n étant le nombre déclaré dans son champ "Le field", et deux octets "SW1, SW2" donnant un compte rendu carte.

La commande "execute" est constituée par l'envoi du message binaire constitué de cinq champs successifs de un octet et d'un champ final de données de plusieurs octets:
- un premier champ nommé "CLA" renfermant un octet identifiant la classe de l'instruction, par exemple, instructions réservées aux applications bancaires,
- un deuxième champ nommé "INS" renfermant l'octet AE en hexadécimal identifiant le type de commande "execute",
- un troisième champ réservé nommé "P1" renfermant l'octet 00 en hexadécimal,
- un quatrième champ réservé nommé "P2" renfermant l'octet 00 en hexadécimal,
- un cinquième champ nommé "Lc field" renfermant un octet dont la valeur n correspond au nombre d'octets du message accompagnant la commande "execute", et
- un sixième champ final nommé "Data field" renfermant les n octets de données annoncés dans le cinquième champ "Lc field". Cette commande "execute" entraîne une réponse de la carte à puce de deux octets "SW1, SW2" donnant un compte rendu carte.

La commande "enveloppe" a la même constitution que la commande "execute" et s'en différencie par la valeur de l'octet de son deuxième champ "INS" identifiant la commande qui vaut C2 en hexadécimal.

Dans ces trois messages les champs respectifs "Le field" et "Lc field" déclarent la longueur du message carte attendu ou celle du message compte rendu du lecteur au moyen desquels transitent les instructions à exécuter et données associées en provenance de la carte à puce ainsi qu'en retour les comptes-rendus des actions exécutées par le lecteur et données résultantes.

A l'introduction de la carte à puce intelligente 2 dans le lecteur 1, la carte à puce se trouve détectée et mise sous tension par le lecteur 1 qui lui envoie un ordre de remise à zéro selon la norme ISO7816-3. Il en résulte un processus d'initialisation du microcontrôleur de la carte à puce intelligente 2 qui se termine par l'envoie au lecteur 1, depuis la carte à puce intelligente 2, d'une réponse d'acquittement à l'ordre de remise à zéro et par une mise en route du programme de gestion de transaction de la carte à puce intelligente 2 pour un premier cycle de traitement aboutissant dans cette dernière à la préparation du premier message carte qui pourra être communiqué au lecteur 1 dès que celui-ci en fera la demande au travers d'une requête de mise à disposition de message sous la forme d'une commande "get response".

A la réception de la réponse d'acquittement à l'ordre de remise à zéro, le lecteur 1 entame un premier cycle d'échange de données avec la carte à puce intelligente 2.

Au cours de ce premier cycle d'échange, le lecteur 1 envoie en direction de la carte à puce intelligente 2 une requête de mise à disposition de message sous la forme d'une commande "get response" pour demander l'envoi du message carte préparé par la carte à puce intelligente 2 après son initialisation.

La carte à puce intelligente 2, à la réception d'une telle requête par la commande "get response" envoie le message carte préparé au lecteur 1.

Le lecteur 1 reçoit le message carte, identifie les données qu'il contient, interprète le message, exécute les commandes demandées et répond à la carte à puce intelligente 2 par une déclaration de compte rendu sous la forme d'une commande "enveloppe" ou "execute", avec un message de compte rendu rapportant à la carte à puce intelligente 2 la façon dont il a réalisé ce qui lui a été demandé et le résultat de ce traitement. Cela termine le premier cycle d'échange.

A la réception de la commande "enveloppe" ou "execute" du premier cycle d'échange en provenance du lecteur 1, la carte à puce intelligente 2 poursuit le déroulement de son programme de gestion de transaction au cours d'un deuxième cycle de traitement pendant lequel elle vérifie d'abord l'exécution correcte du message carte qu'elle vient d'émettre au moyen du message de compte rendu, puis prépare un autre message carte.

Le lecteur 1 entame ensuite un deuxième cycle d'échange en envoyant à la carte à puce intelligente 2 une deuxième commande "get response" pour lire le nouveau message carte. Après traitement des données de ce nouveau message carte, le lecteur 1 rend compte de son exécution à la carte à puce intelligente 2, au moyen d'un message de compte rendu incorporé à une deuxième commande "enveloppe" ou "execute" qui clôt le deuxième cycle d'échange.

La carte à puce intelligente 2, à la réception de cette deuxième commande "enveloppe" ou "execute" en provenance du lecteur 1, entame alors, toujours sous le contrôle de son programme de gestion de transaction, un troisième cycle de traitement au cours duquel elle vérifie l'exécution correcte du message carte qu'elle vient d'émettre, au moyen du message de compte rendu reçu du lecteur 1, puis prépare un autre message carte.

Le lecteur 1 entame alors un troisième cycle d'échange en envoyant à la carte à puce intelligente 2 une troisième commande "get response" pour recevoir le message carte.

Les cycles de traitement, à l'initiative de la carte à puce intelligente 2, et d'échange, à l'initiative du lecteur 1, se succèdent ainsi en fonction du programme de gestion de la transaction stocké dans la carte à puce intelligente 2.

Conformément à la norme ISO7816-3 le lecteur 1 est électriquement maître des échanges, mais le déroulement de la transaction se fait à l'initiative de la carte à puce 4 qui est intelligente.

Le lecteur 1 peut comporter plusieurs connecteurs de carte à puce. Dans ce cas, une seule carte à puce intelligente à la fois pilote la transaction. La carte à puce intelligente qui pilote la transaction est dite "active". Les autres sont dites "passives". La carte à puce intelligente déclarée active est la première qui est capable de fournir une réponse à une instruction "get response" du lecteur.

## Revendications

1. Lecteur (1) de carte à puce intelligente (2) comportant des moyens de gestion à son initiative des échanges d'informations avec une carte à puce intelligente raccordée (2), caractérisé en ce qu'il comporte en outre :
- des moyens de réception et de traitement d'instructions et de données reçues de la carte à puce intelligente raccordée (2) qui gère une transaction à son initiative, et
- des moyens d'élaboration et de transmission de messages de compte rendu à destination de la carte à puce intelligente raccordée (2) sur l'exécution de ses instructions par ledit lecteur (1).

2. Lecteur selon la revendication 1,caractérisé en ce que lesdits moyens de gestion des échanges d'informations avec une carte à puce intelligente raccordée (2) engendrent de manière alternative et répétitive, à destination de la carte à puce intelligente (2) raccordée, d'une part une requête de mise à disposition d'un paquet d'instructions et de données élaborées au sein de ladite carte à puce intelligente (2) dit "message carte" et, d'autre part, une déclaration de compte rendu associée à un message de compte rendu sur l'exécution d'instructions reçues précédemment dans des messages carte de ladite carte à puce intelligente (2) raccordée, ladite déclaration de compte rendu et le message de compte rendu étant dits "compte rendu lecteur".

3. Lecteur selon la revendication 2, caractérisé en ce que lesdits moyens de réception et de traitement d'instructions et de données en provenance de la carte à puce intelligente (2) raccordée comportent un interpréteur de commande (11) qui reconnaît les instructions reçues de ladite carte à puce intelligente (2) raccordée à la suite d'une requête de délivrance d'un message carte et les exécute.

4. Lecteur selon la revendication 2, caractérisé en ce que lesdits moyens de gestion des échanges d'informations avec une carte à puce intelligente raccordée (2) engendrant de manière alternative et répétitive une requête de mise à disposition d'un message carte et une déclaration de compte rendu associée à un message de compte rendu de la part du lecteur (1) élaborent une requête de mise à disposition de message carte sous la forme d'un train numérique comportant plusieurs champs successifs dont un champ d'identification de commande et un champ de déclaration de la longueur du message carte attendu.

5. Lecteur selon la revendication 2, caractérisé en ce que lesdits moyens de gestion des échanges d'informations avec une carte à puce intelligente raccordée (2) engendrant de manière alternative et répétitive une requête de mise à disposition d'un message carte et une déclaration de compte rendu associée à un message de compte rendu de la part du lecteur (1) élaborent une déclaration de compte rendu sous la forme d'un train numérique comportant plusieurs champs successifs dont un champ d'identification de commande et un champ de déclaration de la longueur du message de compte rendu associé.

## Patentansprüche

1. Leser (1) für eine intelligente Chipkarte (2), der Verwaltungsmittel für den Austausch von Informationen mit einer angeschlossenen intelligenten Chipkarte (2) auf seine Initiative aufweist, dadurch gekennzeichnet, das er ferner folgendes aufweist:
- Mittel zum Empfang und zur Verarbeitung von Anweisungen und Daten, die von der angeschlossenen intelligenten Chipkarte (2) empfangen wurden, die eine Transaktion auf ihre Initiative verwaltet, und
- Mittel zum Erarbeiten und zum Senden von Berichtsnachrichten in Richtung zur angeschlossenen intelligenten Chipkarte (2) zur Ausführung ihrer Anweisungen durch den Leser (1).

2. Leser nach Anspruch 1, dadurch gekennzeichnet, daß die Mittel zur Verwaltung des Informationsaustausches mit einer angeschlossenen intelligenten Chipkarte (2) alternativ und wiederholt in Richtung zur angeschlossenen intelligenten Chipkarte (2) einerseits eine Anforderung zur Bereitstellung eines Pakets von Anweisungen und Daten, die im Inneren der intelligenten Chipkarte (2) erarbeitet wurden, die sogenannten "Kartennachricht", und andererseits eine einer Berichtsnachricht zugeordnete Berichtsdeklaration zur Ausführung von Anweisungen erzeugen, die vorher in Kartennachrichten der angeschlossenen intelligenten Chipkarte (2) empfangen wurden, wobei die Berichtsdeklaration und die Berichtsnachricht "Leserbericht" heißen.

3. Leser nach Anspruch 2, dadurch gekennzeichnet, daß die Mittel zum Empfang und zur Verarbeitung von Anweisungen und Daten, die von der angeschlossenen intelligenten Chipkarte (2) stammen, einen Interpreter (11) aufweisen, der die von der angeschlossenen intelligenten Chipkarte (2) infolge einer Anforderung zur Abgabe einer Kartennachricht empfangenen Anweisungen erkennt und sie ausführt.

4. Leser nach Anspruch 2, dadurch gekennzeichnet, daß die Mittel zur Verwaltung des Informationsaustausches mit einer angeschlossenen intelligenten Chipkarte (2), die alternativ und wiederholt eine Anforderung zur Bereitstellung einer Kartennachricht und eine einer Berichtsnachricht von dem Leser (1) zugeordnete Berichtsdeklaration erzeugen, eine Anforderung zur Bereitstellung einer Kartennachricht in Form einer digitalen Folge erarbeiten, die mehrere aufeinanderfolgende Felder aufweist, darunter ein Befehlsidentifizierungsfeld und ein Deklarationsfeld für die Länge der erwarteten Kartennachricht.

5. Leser nach Anspruch 2, dadurch gekennzeichnet, daß die Mittel zur Verwaltung des Informationsaustausches mit einer angeschlossenen intelligenten Chipkarte (2), die alternativ und wiederholt eine Anforderung zur Bereitstellung einer Kartennachricht und eine einer Berichtsnachricht von dem Leser (1) zugeordnete Berichtsdeklaration erzeugen, eine Berichtsdeklaration in Form einer digitalen Folge erarbeiten, die mehrere aufeinanderfolgende Felder aufweist, darunter ein Befehlsidentifizierungsfeld und ein Deklarationsfeld für die Länge der erwarteten Kartennachricht.

## Claims

1. Reader (1) for a smart IC card (2), including means for managing, on its initiative, the exchanges of information with a connected smart IC card (2), characterized in that it also includes:
- means for receiving and processing instructions and data received from the connected smart IC card (2), which manages a transaction on its initiative, and
- means for developing and transmitting report messages to the connected smart IC card (2) on execution of its instructions by the said reader (1).

2. Reader according to Claim 1, characterized in that the said means for managing the exchanges of information with the connected smart IC card (2) alternately and repetitively generate, for the purpose of being sent to the connected smart IC card (2), on the one hand a request for provision of a packet of instructions and data developed in the said smart IC card (2), this being referred to as the "card message" and, on the other hand, a report declaration associated with a report message regarding the execution of instructions previously received in card messages from the said connected smart IC card (2), the said report declaration and the report message being referred to as the "reader report".

3. Reader according to Claim 2, characterized in that the said means for receiving and processing instructions and data coming from the connected smart IC card (2) include a command interpreter (11) which recognizes the instructions received from the said connected smart IC card (2) subsequent to a request for delivery of a card message, and executes them

4. Reader according to Claim 2, characterized in that the said means for managing the exchanges of information with a connected smart IC card (2) which alternately and repetitively generate a request for provision of a card message and a report declaration associated with a report message on the part of the reader (1) develop a card-message provision request in the form of a digital sequence having a plurality of successive fields, including a command identification field and a field for declaring the length of the expected card message.

5. Reader according to Claim 2, characterized in that the said means for managing the exchanges of information with a connected smart IC card (2) which alternately and repetitively generate a request for provision of a card message and a report declaration associated with a report message on the part of the reader (1) develop a report declaration in the form of a digital sequence having a plurality of successive fields, including a command identification field and a field for declaring the length of the associated report message.
